## Europäisches Patentamt
## European Patent Office
## Office européen des brevets

(19)

(11) Numéro de publication: **0 168 330**
**B1**

(12) # FASCICULE DE BREVET EUROPÉEN

(45) Date de publication du fascicule du brevet:
10.05.89

(51) Int. Cl.⁴: **H 04 L 7/02**

(21) Numéro de dépôt: **85401449.5**

(22) Date de dépôt: **15.07.85**

(54) Dispositif de cadrage automatique d'horloge locale par rapport à un signal de données et circuit d'échantillonnage en comportant application.

(30) Priorité: 13.07.84 FR 8411189

(43) Date de publication de la demande:
15.01.86 Bulletin 86/3

(45) Mention de la délivrance du brevet:
10.05.89 Bulletin 89/19

(84) Etats contractants désignés:
DE GB IT

(56) Documents cité:
**WO-A-81/01226**
**US-A-3 906 064**

(73) Titulaire: **Servel, Michel, Le Rhu en Servel, F-22300 Lannion (FR)**
Titulaire: **Thomas, Alain, Ar Santé L 322, F-22300 Lannion (FR)**

(72) Inventeur: **Servel, Michel, Le Rhu en Servel, F-22300 Lannion (FR)**
Inventeur: **Thomas, Alain, Ar Santé L 322, F-22300 Lannion (FR)**

(74) Mandataire: **Fort, Jacques, CABINET PLASSERAUD 84, rue d'Amsterdam, F-75009 Paris (FR)**

EP 0 168 330 B1

LIBER, STOCKHOLM 1989

## Description

L'invention a pour objet un dispositif de cadrage automatique des fronts d'une horloge locale par rapport aux intervalles de temps de présence de données numériques dans un signal périodique, dispositif utilisable notamment dans un circuit d'échantillonnage des signaux afin d'obtenir des échantillons représentatifs des valeurs réelles.

On rencontre souvent, dans les installations de transmission de données sous forme numérique, le problème de la saisie des données par échantillonnage à l'aide d'une horloge synchrone du signal, présentant initialement une relation de phase aléatoire avec le signal.

On a déjà proposé des dispositifs destinés à assurer automatiquement le cadrage. On a notamment proposé un dispositif de cadrage automatique destiné à un terminal de synchronisation de multiplex fonctionnant de la façon suivante: on recherche le mot de verrouillage de trame par échantillonnage à l'aide de l'horloge locale; en cas d'échec, on change le front d'horloge et ce jusqu'à identifier le mot de verrouillage. Ce système présente l'inconvénient de ne s'adapter qu'à une structure de trame définie contenant un motif particulier discernable. Au surplus, il réagit mal aux erreurs.

On connaît aussi un dispositif de cadrage automatique d'horloge locale conforme au préambule de la revendication 1. Ce dispositif (brevet US-A-3 908 084) fonctionne en asynchrone de façon à caler un bit de "start" sur l'horloge locale en sélectionnant une fois pour toutes une des données, retardée ou non, comme donnée valide, et ce pour toute la durée du mot de start. Un tel dispositif est applicable uniquement au cas où la transmission se fait par blocs de durée définie, et ne permet d'effectuer le cadrage de l'horloge qu'au début de la réception d'un bloc.

Cette limitation rend l'approche inutilisable en cas de transmission continue, ou par blocs de dimensions variables. De plus, elle suppose que la durée des blocs est suffisamment courte pour qu'il n'y ait pas de décadrage progressif par suite de la dérive.

L'invention vise au contraire à fournir un dispositif effectuant le recadrage en permanence, quelle que soit la durée du flot de données, en détectant les transitions de la partie courante du signal de donnée. Un tel dispositif, dans lequel le cadrage s'effectue à chaque bit reçu pourra tolérer une dérive et sera adaptable quel que soit le mode de transmission.

Dans ce but, l'invention propose notamment un dispositif caractérisé par des moyens pour sélectionner en permanence, comme échantillon valide de données cadré par rapport à l'horloge, l'un des signaux de sortie des premiers moyens de mémorisation et des moyens pour modifier cette sélection si un critère prédéterminé est rempli, à savoir que, pour deux signaux d'horloge consécutifs, d'une part, la transition de données a été localisée dans deux sections de retard adjacente (modulo une période d'horloge) et, d'autre part, la donnée sélectionnée lors du deuxième signal d'horloge correspond au signal de données prélevé au point intermédiaire entre lesdites sections de retard adjacents.

L'invention sera mieux comprise à la lecture de la description qui suit d'un mode particulier de réalisation, donné à titre d'exemple non limitatif. La description se réfère aux dessins qui l'accompagnent, dans lesquels:

- la Figure 1 est un schéma montrant un ensemble d'échantillonnage et un ensemble de détection des transitions utilisable dans un dispositif suivant l'invention;
- les Fig. 2A et 2B sont des chronogrammes montrant divers échelonnements dans le temps possibles des signaux apparaissant dans les ensembles de la Figure 1;
- la Figure 3 est un synoptique montrant un circuit d'échantillonnage incorporant un dispositif de cadrage suivant l'invention.

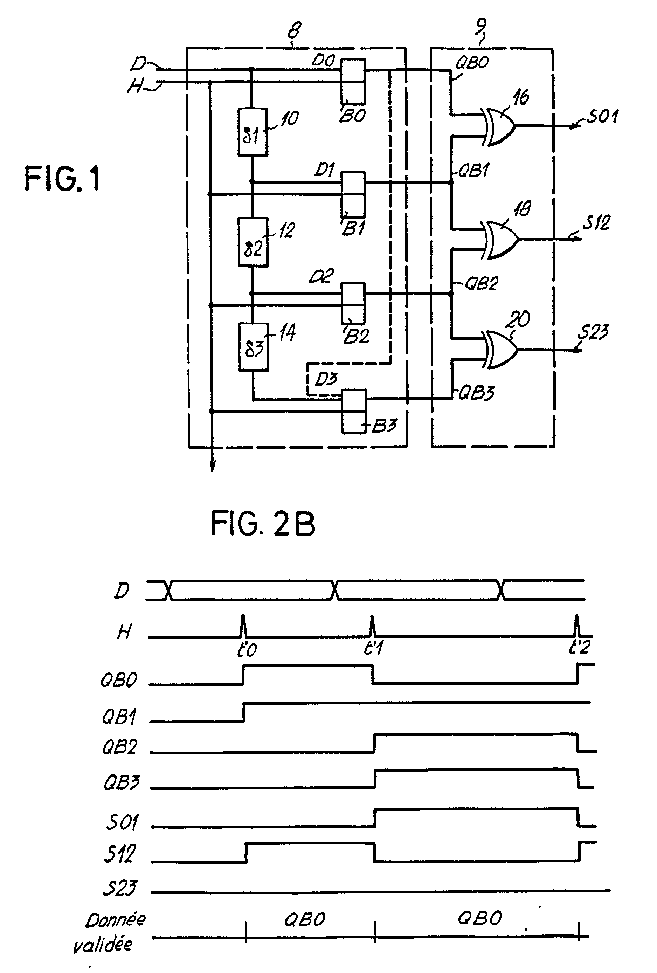

L'invention implique de localiser les transitions du signal de données par rapport au front d'une horloge locale. La Figure 1 montre un dispositif permettant d'atteindre ce résultat. Le dispositif peut être regardé comme comportant un ensemble d'échantillonnage 8 muni de moyens permettant de disposer simultanément du signal d'horloge, du signal de données, et de signaux décalés chacun d'un retard prédéterminé par rapport à l'un des deux précédents, et un ensemble de détection des transitions 9.

Dans le dispositif de la Figure 1, ces moyens permettent de générer, à partir du signal de données de période nominale T arrivant sur une entrée D et appliqué sur l'entrée de données DO d'une bascule BO, trois signaux retardés respectivement de $\delta1$, $\delta1 + \delta2$ et $\delta1 + \delta2 + \delta3 = T$. Les retards sont par exemple obtenus par des lignes à retard 10, 12 et 14 parcourues successivement par le signal de données. Les signaux retardés sont appliqués sur les entrées de données D1, D2 et D3 de bascules respectives B1, B2 et B3. Le signal d'horloge, arrivant par une entrée H, est appliqué aux entrées d'horloge de toutes les bascules BO, B1, B2 et B3.

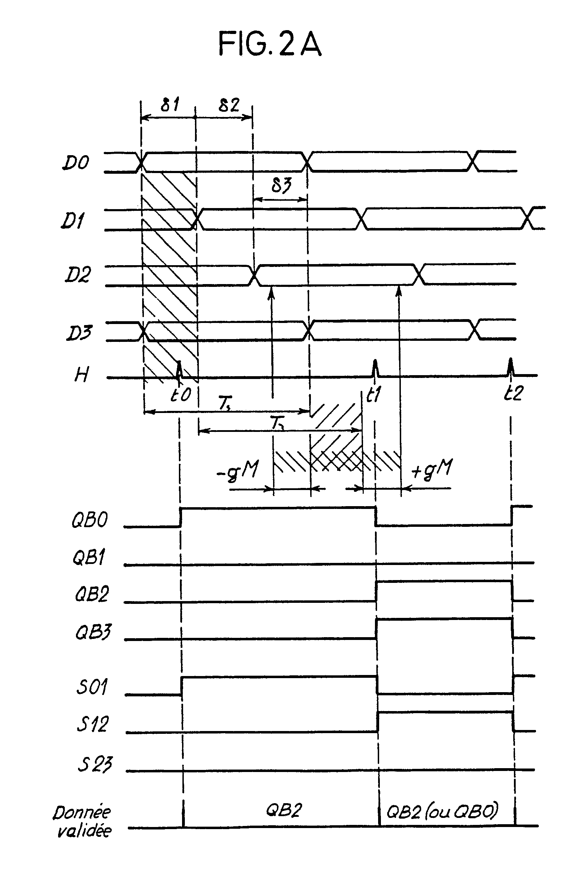

L'échelonnement des signaux appliqués aux bascules est illustré sur la Figure 2A, dans le cas où on adopte $\delta1 = \delta2 = \delta3 = T/3$, ce qui sera en règle générale la solution la plus avantageuse. A chaque apparition d'un front d'horloge, les quatre bascules échantillonnent le signal de données qu'elles recoivent. Sur la Figure 2A, le premier front d'horloge apparaît à un instant t0, alors que la première transition de signal est en cours de transfert dans la ligne à retard 10, donnant un retard $\delta1$. Dans ce cas, les bascules BO et B1 vont échantillonner deux données ayant des valeurs différentes.

L'ensemble 9 de détection des transitions utilise cette constatation pour déterminer la pòsition du front d'horloge par rapport aux transitions de données, avec une approximation qui dépendra de la valeur choisie pour $\delta 1$, $\delta 2$ et $\delta 3$ (l'utilisation de trois retards seulement n'étant pas obligatoire).

L'ensemble 9 est constitué de trois portes OU EXCLUSIF 16, 18 et 20 à deux entrées. Les deux entrées de chaque porte reçoivent deux échantillons provenant de deux bascules successives parmi les bascules B0, B1, B2 et B3. La Figure 2A montre les échantillons QB0, QB1, QB2 et QB3 obtenus à l'apparition du front d'horloge à l'instant t0. Seule la porte 16 recevra deux échantillons de valeurs différentes et fournira sur sa sortie une transition (lignes S01, S02 et S03 sur la Figure 2A).

Une transition ne sera évidemment localisée avec certitude que si la durée totale de sa propagation $\delta 1 + \delta 2 + \delta 3$ dure une période d'horloge. Ainsi, on est certain qu'un front d'horloge se présentera au cours de la propagation de la transition de l'entrée D jusqu'à la bascule B3. Les bascules terminales B0 et B3 fournissent donc des données décalées d'une période T complète.

L'imprécision sur la localisation des fronts d'horloge par rapport aux transitions de données apparaît sur la Figure 2A. La seule information disponible est que l'instant t0 se trouve entre une transition du signal d'origine D0 et la transition correspondante du signal D1, c'est-à-dire dans une plage temporelle de largeur $\delta 1$. Mais le front d'horloge peut être aussi bien immédiatement après la transition de D0 qu'avant la transition de D1.

En conséquence, dans le cas d'une gigue de phase de valeur maximale gM, le front suivant du signal d'horloge interviendra à un instant t1 qui se placera dans un intervalle de temps $\delta 1 + 2$ gM dont le centre est décalé de T par rapport au centre de l'intervalle $\delta 1$ au cours duquel est apparu le front d'horloge t0.

L'invention utilise la constatation que, dans la mesure où les retards $\delta 1$, $\delta 2$ et $\delta 3$ sont tels que la gigue crête-crête a une valeur inférieure au plus petit de ces retards, le front d'horloge t1 interviendra obligatoirement, même dans le cas de gigue maximale, pendant la période qui suit immédiatement la transition du signal D2, lorsque les échantillons QB0 et QB1 ont été différents. Dans le cas d'une autre disposition relative des transitions et du front d'horloge, on peut toujours déterminer, à l'instant où survient le front d'horloge, quelle information peut être considérée comme correcte, c'est-à-dire convenablement cadrée par rapport à l'horloge.

Le choix s'effectuera suivant un critère prédéterminé qui peut notamment être le suivant: on sélectionne, comme signal de donnée, une des valeurs de donnée parmi la valeur d'origine et l'une des valeurs décalées en excluant systématiquement une donnée transmise dès qu'elle a été analysée comme étant erronée.

Il peut se faire que le second front d'horloge, à l'instant t1 intervienne alors qu'une transition de donnée est en cours de propagation dans la seconde ligne à retard 12. Cela permet de préciser la phase de l'horloge par rapport au signal de donnée. Dans le cas montré en Figure 2A, le front d'horloge intervient à l'instant t1 pendant la traversée de la transition dans l'élément de retard 12. La donnée D0 échantillonnée peut alors être considérée comme bonne pour les mêmes raisons que la donnée D2 précédemment analysées. Mais la donnée D2 n'en reste pas moins également valide. Dans le cas représenté, utilisant trois retards, on voit que deux échantillons pourront être considérés comme corrects dans chaque cas.

La Figure 2B, où certains seulement des signaux ont été représentés, montre un autre cas possible, où le premier front d'horloge intervient à un instant t'0 lors de la propagation d'une transition de donnée dans la seonde ligne à retard 12.

Dans ce cas, on sera conduit à retenir, comme donnée valide, celle fournie par la bascule B0. Si le nouveau front d'horloge intervient à l'instant t'1 alors qu'une transition de donnée est en train de se propager dans la première ligne à retard 10, l'emplacement du front d'horloge par rapport aux transitions de donnée se trouve précisé et on peut constater que les données fournies par la bascule d'échantillonnage B2 sont également valides.

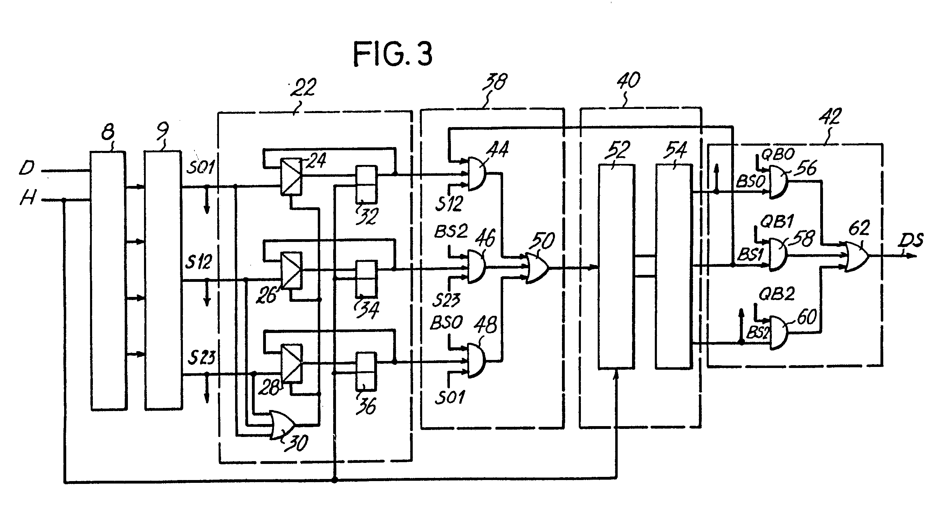

On décrira maintenant, en faisant référence à la Figure 3, un dispositif complet de cadrage automatique, fournissant en sortie des échantillons jugés valides. Le critère essentiel qui sera mis en oeuvre est le suivant: si, lors de l'échantillonnage des données par les différentes bascules B0, B1, B2 et B3, on constate que la transition en cours est passée d'une section de retard $\delta i$ à une autre section de retard $\delta i + 1$ (ou $\delta i - 1$), la bascule dont l'entrée de données reçoit le signal délivré par les sections de retard $\delta i$ (ou $\delta i - 1$) est considérée comme fournissant une information erronée.

Le dispositif de la Figure 3 comporte un ensemble d'échantillonnage 8 et un ensemble de détection des transitions 9 qui peuvent avoir la constitution montrée en Figure 1. Toutefois, la ligne à retard $\delta 3$ peut être supprimée, le retard $\delta 3$ étant remplacé par un retard artificiel, constitué en reliant la sortie QB0 de la bascule B0 à l'entrée de données D3 de la bascule B3 (ligne en tirets sur la Figure 1). Le retard des données à l'entrée de B3 par rapport à celles de l'entrée de B0 sera égal à une période d'horloge.

Les portes OU EXCLUSIF de l'ensemble 9 attaquent un bloc 22 de mémorisation de la dernière localisation d'une transition de données aux instants de saisie par l'horloge. Ce bloc 22 comprend trois multiplexeurs 24, 26 et 28 du type deux vers un dont l'entrée de sélection est reliée à la sortie d'une porte OU à trois entrées 30. Les trois entrées de la porte sont reliées aux sorties des portes OU EXCLUSIF 16, 18 et 20. Ainsi, l'entrée de sélection des multiplexeurs est activée en réponse à la détection d'une transition par l'une quelconque des portes OU EXCLUSIF 16, 18 et 20. Chacun des multiplexeurs 24, 26 et 28 attaque une bascule de mémorisation correspondante 32, 34 et 36 dont l'entrée d'horloge est reliée à l'entrée H du circuit. Les bascules 32, 34 et 36 mémorisent des signaux représentatifs de la présence ou de l'absence de transition dans les espaces temporels de durée δi fractionnant la période d'horloge. La sortie de chaque bascule 32, 34 ou 36 est reliée à une entrée du multiplexeur correspondant 24, 26 ou 28 de façon que la dernière transition repérée reste mémorisée dans une bascule en cas d'absence de transition pendant une ou plusieurs périodes. Ce couplage assure la fonction mémoire, nécessaire du fait qu'il peut y avoir absence de transition pendant plusieurs périodes T.

Le bloc de mémorisation 22 attaque un bloc de détection d'erreur 38. Le dispositif comporte enfin un bloc d'aiguillage et de modification de choix 40 et un bloc de sélection 42 qui seront successivement décrits.

Le bloc de détection d'erreur 38 comporte trois portes ET 44, 46 et 48 ayant pour rôle d'analyser l'état des transitions précédentes, des transitions présentes, et de la donnée sélectionnée par le bloc 40. Chaque porte comporte trois entrées. L'une des entrées reçoit le signal de sortie d'une bascule correspondante du bloc 22. Une seconde entrée est reliée à l'une des trois sorties de l'ensemble de détection des transitions 9. Une troisième entrée est reliée à l'une des trois sorties du bloc 40.

On voit que, par exemple, la porte ET 44 présente un état haut en sortie si la transition précédente était située au cours du retard δ1, si la transition actuelle est située au cours du retard 2 et si la donnée valide est fournie par la bascule BS1. Or, cette situation correspond justement à un cas où la bascule B1 fournit une information erronée. Le bloc 38 va alors intervenir pour détecter l'erreur et modifier le choix. La porte OU 50 recueille l'information de "sélection erronée" fournie par l'une quelconque des trois portes ET 44, 46 et 48 et émet un signal de sortie vers le bloc 40.

Du fait du caractère oscillatoire de la gigue, le bloc de détection d'erreur 38 donne des résultats satisfaisants avec seulement trois portes ET 44, 46 et 48 qui détectent respectivement le passage des transitions de B0 - B1 à B1 - B2, de B1 - B2 à B2 - B3 et de B2 - B3 à B0 - B1. Un bloc plus complet répondant à toutes les situations comporte de plus trois autres portes ET (non représentées) chargées respectivement de détecter le déplacement des transitions de B0 - B1 à B2 - B3, de B3 - B1 à B1 - B2 et de B1 - B2 à B0 - B1.

L'élément d'entrée du bloc 40 est constitué par un compteur modulo trois 52 suivi d'un décodeur "deux vers trois" 54. Les sorties BS0, BS1 et BS2 sont utilisées pour valider respectivement la sélection des données échantillonnées par B0, B1 et B2. Pour cela, ces trois sorties sont reliées à des portes ET respectives 56, 58 et 60 appartenant au bloc de sélection 42. La seconde entrée de chacune des portes reçoit le signal échantillonné par une bascule correspondante B0, B1 ou B2. Une porte OU 62 constituant l'élément de sortie du bloc 42 fournit la donnée sélectionnée DS.

Les sorties BS0, BS1 et BS2 sont également appliquées aux portes ET 48, 44 et 46, respectivement, pour permettre à ces dernières d'effectuer la comparaison mentionnée plus haut.

On voit que le bloc de détection d'erreur 38 fournit un signal modifiant l'action du bloc de sélection 42 lorsque le résultat du test qu'il effectue montre que la donnée transmise est erronée. Le critère appliqué est le suivant: il y a erreur sur la donnée transmise si, à l'instant d'échantillonnage,

- d'une part, une transition est présente dans un espace temporel δi - 1 (ou δi + 1) adjacent à l'espace temporel δi associé à la transition précédemment prise en compte,

- d'autre part, le signal sélectionné est le signal échantillonné délivré par la bascule alimentée en données par le signal de données issu de la section de retard δi - 1 (ou δi) modulo une période.

La porte OU 50 délivre alors un créneau qui incrémente le compteur 52 et modifie la sélection effectuée par le bloc d'aiguillage 40.

## Revendications

1. Dispositif de cadrage automatique d'horloge par rapport à un signal de données, comportant un moyen retardateur (10, 12, 14) comportant plusieurs sections de retard pour générer respectivement à partir du signal de données (D), au moins trois signaux de données retardés (D1, D2, D3) présentant, avec le signal de données initial, des décalages temporels croissants, le retard global étant égal à une période nominale du signal d'horloge, des premiers moyens (B0 - B3) pour mémoriser, au rythme de l'horloge, le signal de données initial et les signaux de données retardés, caractérisé par des moyens (42) pour sélectionner en permanence comme échantillon valide de données cadrées par rapport à l'horloge, l'un des signaux de sortie des premiers moyens de mémorisation, et des moyens (38) pour modifier cette sélection en fonction d'un critère prédéterminé, à savoir que, pour deux signaux d'horloge consécutifs, d'une part, la transition de données a été localisée dans deux sections de retard adjacentes (modulo une période d'horloge) et, d'autre part, la donnée sélectionnée lors du deuxième signal d'horloge correspond au signal de données prélevé au point intermédiaire entre lesdites sections de retard adjacentes.

2. Dispositif selon la revendication 1, caractérisé en ce qu'il comporte des moyens (16, 18, 20) pour identifier, à un instant de survenance du signal d'horloge, l'existence d'une transition de données se propageant dans le moyen retardateur (10, 12, 14) et la position de cette transition dans l'une des sections de retarrd, des seconds moyens (22) mémoriser la position dans l'une des sections de retard de la transition de données identifiée auparavant, la sélection de l'un des signaux de sortie des premiers moyens de mémorisation, en tant que donnée valide, étant modifiée lorsque:

(a) les moyens (16, 18, 20) d'identification et les seconds moyens de mémorisation (32, 34, 36) sont dans des états respectivement caractéristiques de transitions de données identifiées dans deux sections de retard adjacentes (modulo une période d'horloge) et que:

(b) la donnée (D0, D1, D2) sélectionnée en tant que donnée valide est celle fournie par celui des premiers moyens de mémorisation (B0 à B2) qui reçoit un signal de données retardé par l'une des deux sections de retard mentionnées en (a) mais pas par l'autre section de retard.

3. Dispositif selon la revendication 1 ou 2, caractérisé en ce que les retards entre les différents signaux de données décalés sont tous identiques et représentent la même fraction entière de la période nominale.

4. Dispositif selon la revendication 2 ou 3, caractérisé en ce que les premiers moyens de mémorisation sont constitués par au moins quatre bascules (B0 - B3) dont chacune a une entrée de validation qui reçoit le signal d'horloge (H) et une entrée de données qui reçoit le signal de données avec un décalage temporel déterminé par le moyen retardateur, les sorties de deux bascules adjacentes étant reliées à une même porte OU EXCLUSIF (16, 18 ou 20).

5. Dispositif selon la revendication 4, caractérisé en ce que les portes OU EXCLUSIF (16, 18, 20) constituent lesdits moyens d'identification.

6. Dispositif selon l'une quelconque des revendications 4 et 5, caractérisé en ce que les seconds moyens (22) comportent trois ensembles constitués chacun d'un multiplexeur (24, 26 ou 28) et d'une bascule (32, 34 ou 36), chaque multiplexeur recevant sur une entrée la sortie d'une porte OU EXCLUSIF correspondante (16, 18 ou 20), sur l'autre entrée la sortie de la bascule destinée à assurer une mémorisation, et son entrée de sélection étant reliée à la sortie d'une porte OU (30) qui reçoit les sorties des portes OU EXCLUSIF.

7. Dispositif selon la revendication 6, caractérisé en ce que la sortie des bascules (32, 34, 36) des seconds moyens de mémorisation (22) attaque des portes ET (44, 46, 48) appartenant à un bloc de détection d'erreur (38), lesdites portes ET recevant également, suivant une répartition appropriée, des signaux de sortie des moyens d'identification (16, 18, 20) et des signaux représentatifs de la donnée sélectionnée, ladite répartition étant telle que le bloc (38) de détection d'erreur analyse l'état des transitions précédentes, des transitions présentes et de la donnée sélectionnée pour fournir un signal de sortie indicatif de sélection erronée.

8. Dispositif selon la revendication 7, caractérisé en ce que les sorties du bloc de détection d'erreur (38) attaquent un compteur modulo $\underline{n}$, $\underline{n}$ étant le nombre de retards, suivi d'un décodeur à $\underline{n}$ sorties, le compteur (52) et le décodeur (54) constituant un bloc d'aiguillage (40) dont la sortie identifie la donnée à sélectionner.

9. Dispositif selon la revendication 8, caractérisé en ce que les sorties du bloc d'aiguillage (40) attaquent $\underline{n}$ portes ET (56, 58, 60) recevant chacune un signal échantillonné provenant des premiers moyens de mémorisation pour débloquer la porte correspondant à la donnée sélectionnée.

**Patentansprüche**

1. Vorrichtung zur automatischen Taktausrichtung in bezug auf ein Datensignal, umfassend ein Verzögerungsmittel (10, 12, 14), das mehrere Verzögerungsabschnitte umfaßt, um jeweils ausgehend von dem Datensignal CD) wenigstens drei verzögerte Datensignale (D1, D2, D3) zu erzeugen, die mit dem Ausgangsdatensignal zunehmende zeitliche Verschiebungen aufweisen, wobei die Gesamtverzögerung gleich einer Nominalperiode des Taktgebersignals ist, erste Mittel (B0 - B3) zum Speichern des Ausgangsdatensignals und der verzögerten Datensignale im Rhythmus des Taktgebers, gekennzeichnet durch Mittel (42), um in Permanenz als gültiges Muster von ausgerichteten Datensignalen in bezug auf den Taktgeber eines der Ausgangssignale der ersten Speichermittel auszuwählen, und Mittel (38), um diese Auswahl in Abhängigkeit von einem vorbestimmten Kriterium zu modifizieren, nämlich, daß für zwei aufeinanderfolgende Taktsignale einerseits der Datenübergang in zwei Nachbarverzögerungsabschnitten (Modulo eine Taktperiode) lokalisiert worden ist und andererseits das ausgewählte Datensignal zur Zeit des zweiten Taktsignals dem entnommenen Datensignal im Zwischenpunkt zwischen den Nachbarverzögerungsabschnitten entspricht.

2. Vorrichtung nach Anspruch 1, dadurch gekennzeichnet, daß sie Mittel (16, 18, 20), um in einem Augenblick des Hinzukommens des Taktsignals das Vorhandensein eines sich im Verzögerungsmittel (10, 12, 14) ausbreitenden Datenübergangs und die Position dieses Übergangs in einem der Verzögerungsabschnitte zu identifizieren, zweite Mittel (22) umfaßt, um in einem der Verzögerungsabschnitte die Position des zuvor identifizierten Datenübergangs zu speichern, wobei die Auswahl des einen der Ausgangssignale der ersten Speichermittel als gültiges Datensignal modifiziert wird, wenn:

(a) die Identifizierungsmittel (16, 18, 20) und die zweiten Speichermittel (32, 34, 36) in entsprechenden charakteristischen Übergangszuständen von identifizierten Datensignalen in zwei Nachbarverzögerungsabschnitten (Modulo eine Taktperiode) sind und:

(b) das ausgewählte Datensignal (D0, D1, D2) als gültiges Datensignal dasjenige ist, das von demjenigen der ersten Speichermittel (B0 bis B2) geliefert wird, das ein durch den einen der beiden bei (a) erwähnten Verzögerungsabschnitte, aber nicht durch den anderen Verzögerungsabschnitt verzögertes Datensignal empfängt.

3. Vorrichtung nach Anspruch 1 oder 2, dadurch <u>gekennzeichnet</u>, daß die Verzögerungen unter den verschiedenen verschobenen Datensignalen sämtlich identisch sind und denselben Gesamtbruchteil der Nominalperiode aufweisen.

4. Vorrichtung nach Anspruch 2 oder 3, dadurch <u>gekennzeichnet</u>, daß die ersten Speichermittel durch wenigstens vier Kippschaltungen (B0 - B3) gebildet sind, von denen jede einen Eingang zum Gültigmachen, der das Taktsignal (H) empfängt, und einen Dateneingang besitzt, der das Datensignal mit einer durch das Verzögerungsmittel bestimmten zeitlichen Verschiebung empfängt, wobei die Ausgänge von zwei benachbarten Kippschaltungen mit demselben ENTWEDER-ODER-Gatter (16, 18 oder 20) verbunden sind.

5. Vorrichtung nach Anspruch 4, dadurch <u>gekennzeichnet</u>, daß die ENTWEDER-ODER-Gatter (16, 18, 20) die Identifizierungsmittel bilden.

6. Vorrichtung nach einem beliebigen der Ansprüche 4 und 5, dadurch <u>gekennzeichnet</u>, daß die zweiten Mittel (22) drei Gruppen umfassen, die jeweils durch einen Multiplexer (24, 26 oder 28) und eine Kippschaltung (32, 34 oder 36) gebildet sind, wobei jeder Multiplexer auf einem Eingang das Ausgangssignal eines entsprechenden ENTWEDER-ODER-Gatters (16, 18 oder 20), auf dem anderen Eingang das Ausgangssignal der bestimmten Kippschaltung zum Sicherstellen einer Speicherung empfängt und sein Auswahleingang mit dem Ausgang eines ODER-Gatters (30) verbunden ist, das die Ausgangssignale der ENTWEDER-ODER-Gatter empfängt.

7. Vorrichtung nach Anspruch 6, dadurch <u>gekennzeichnet</u>, daß das Ausgangssignal der Kippschaltungen (32, 34, 36) der zweiten Speichermittel (22) zu einem Fehlererfassungsblock (38) gehörende UND-Gatter (44, 46, 48) treibt, wobei die UND-Gatter in gleicher Weise, einer geeigneten Verteilung folgend, Ausgangssignale der Identifizierungsmittel (16, 18, 20) und repräsentative Signale des ausgewählten Datensignals empfangen, wobei die Verteilung ist, so wie der Fehlererfassungsblock (38) den Zustand der vorhergehenden Übergänge, der vorliegenden Übergänge und des ausgewählten Datensignals analysiert, um ein fehlerhafte Auswahl anzeigendes Ausgangssignal zu liefern.

8. Vorrichtung nach Anspruch 7, dadurch <u>gekennzeichnet</u>, daß die Ausgänge des Fehlererfassungsblocks (38) einen Modulo n-Zähler treiben, wobei n die Verzögerungszahl ist, gefolgt von einem Dekodierer mit n Ausgängen, wobei der Zähler (52) und der Dekodierer (54) einen Verzweigungsblock (40) bilden, dessen Ausgangssignal das auszuwählende Datensignal identifiziert.

9. Vorrichtung nach Anspruch 8, dadurch <u>gekennzeichnet</u>, daß die Ausgänge des Verzweigungsblocks (40) n UND-Gatter (56, 58, 60) treiben, die jeweils ein von den ersten Speichermitteln ausgehendes Abtastsignal empfangen, um das dem ausgewählten Datensignal entsprechende Gatter freizugeben.

**Claims**

1. Device for automatically synchronizing a clock with respect to a data signal, comprising delay means (10, 12, 14) having several delay sections for respectively generating, from the data signal (D), at least three delayed data signals (D1, D2, D3) having progressively increasing time offsets with respect to the initial data signal, the overall delay being equal to a set period of the clock signal, first means (B0, B3) for storing, at the rate of the clock, the initial data signal and the delayed data signals, characterized by means (42) for continuously selecting, as a valid sample of data synchronized with respect to the clock, one of the output signals of the first storage means, and means (38) for modifying the selection responsive to a predetermined criterium, namely that, for two consecutive clock signals, on the one hand, the data transition was identified within two adjacent delay sections (modulo-1 clock period) and, on the other hand, the data selected during the second clock signal corresponds to the data signal picked up at the point intermediate between said adjacent delays sections.

2. Device according to claim 1, characterized in that it comprises means (16, 18, 20) for identifying, at an instant when a clock signal occurs, whether there exists a data transition propagating within the delay means (10, 12, 14) and the location of the transition within one of the delay sections, second means (22) for storing the position of the transition of the previously identified data in one of the delay sections, the selection of one of the output signals of the first storage means, as the valid data, being modified when:

(a) the means (16, 18, 20) for identification and the second storage means (32, 34, 36) are in conditions which respectively characterize data transitions identified in two adjacent delay sections (modulo-1 clock period); and

(b) the data (D0, D1, D2) selected as valid data is the data delivered by that of the first storage means (B0 to B2) which receives a data signal delayed by one of the two delay sections mentioned at (a), but not by the other delay section.

3. Device according to claim 1 or 2, characterized in that the delays between the different offset data signals are mutually identical and represent the same integer fraction of the set period.

4. Device according to claim 2 or 3, characterized in that the first storage means consist of at least four flip-flops (B0 - B3) each of which has an enabling input which receives the clock signal (H) and a data input which receives the data signal with a time offset which is determined by the delay means, the outputs of two adjacent flip-flops being connected to a same EXCLUSIVE OR gate (16, 18 or 20).

5. Device according to claim 4, characterized in that the EXCLUSIVE OR gates (16, 18, 20) constitute said identification means.

6. Device according to any one of claims 4 and 5, characterized in that the second means (22) comprises three sets each consisting of a multiplexer (24, 26 or 28) and a flip-flop (32, 34 or 36), each multiplexer receiving the output of a respective EXCLUSIVE OR gate (16, 18 or 20) on one input and the output of the flip-flop arranged for storage on its other input, its selection input being connected to the output of an OR gate (30) which receives the outputs of the EXCLUSIVE OR gates.

7. Device according to claim 6, characterized in that the outputs of the flip-flops (32, 34, 36) of the second storage means (22) drive AND gates (44, 46, 48) belonging to an error detection block (38), said AND gates further receiving, according to an appropriate distribution, output signals from the identification means (16, 18, 20) and signals representing the selected data, said distribution being such that the error detection block (38) analyzes the condition of the preceding transitions, of the present transitions and of the selected data for delivering an output signal indicating an erroneous selection.

8. Device according to claim 7, characterized in that the outputs of the error detection block (38) drive a modulo-n counter, n being the number of delays, followed with a decoder having n outputs, the counter (52) and the decoder (54) constituting a switching block (40) whose output identifies the data to be selected.

9. Device according to claim 8, characterized in that the outputs of the switching block (40) drive n AND gates (56, 58, 60) each receiving a sampled signal from the first storage means for enabling the gate corresponding to the selected data.

EP 0 168 330 B1

FIG. 1

FIG. 2B

1

# FIG. 2 A

# FIG. 3

EP 0 168 330 B1